# EUROPÄISCHE PATENTSCHRIFT

(11) **EP 1 877 330 B1**
(45) Veröffentlichungstag und Bekanntmachung des Hinweises auf die Patenterteilung: **22.06.2011**
(21) Anmeldenummer: 06724157.0
(22) Anmeldetag: 08.04.2006
(51) Int. Cl.: B65G 43/02, B65G 15/08

(54) **VERFAHREN ZUR ÜBERWACHUNG DER BANDAUSRICHTUNG UND/ODER DES BANDLAUFS EINER GURTBANDFÖRDEREINRICHTUNG SOWIE GURTBANDFÖRDERER**
METHOD FOR MONITORING THE ORIENTATION OF A BAND AND/OR BAND STRIPS OF A BELT CONVEYOR DEVICE AND A BELT CONVEYOR DEVICE
PROCEDE DE SURVEILLANCE DE L'ORIENTATION DE LA BANDE ET/OU DU DEFILEMENT DE LA BANDE BANDLAUFS D'UN DISPOSITIF TRANSPORTEUR A COURROIE ET DISPOSITIF TRANSPORTEUR A COURROIE

(30) Priorität: 06.05.2005 DE 102005021627
(43) Veröffentlichungstag der Anmeldung: 16.01.2008
(73) Patentinhaber: RWE Power Aktiengesellschaft, 45128 Essen (DE)
(72) Erfinder: ZIEGLER, Manfred, 50374 Erftstadt (DE)
(74) Vertreter: Polypatent
(86) Internationale Anmeldenummer: PCT/EP2006/003220
(87) Internationale Veröffentlichungsnummer: WO 2006/119832

(56) Entgegenhaltungen:
- DE-A1- 19 911 640
- DE-A1- 19 911 642

## Beschreibung

Die Erfindung betrifft ein Verfahren zur Überwachung der Bandausrichtung und/oder des Bandlaufs einer Gurtbandfördereinrichtung.

Die Erfindung betrifft weiterhin einen Gurtbandförderer für Schüttgut, mit wenigstens einem zwischen Umkehrstationen und/oder Antriebsstationen endlos umlaufenden, flexiblen Gurtband, welches ein Lasttrum und ein Leertrum bildet, wobei das Gurtband zumindest teilweise zwischen den Stationen auf Tragrollen abgestützt ist.

Gurtbandförderanlagen der vorstehend beschriebenen Art finden häufig als Massengutförderer in Bergbaubetrieben Anwendung, beispielsweise in Tagebaubetrieben. Die zu transportierenden Massen werden auf einem endlos umlaufenden Gurtband gefördert. An mindestens einer der Kehren des Gurtbandes wird kraftschlüssig die erforderliche Zugkraft eingeleitet. Zwischen den Kehren bzw. Umkehrstationen ist der Gurt über Tragrollen abgestützt. Unterschieden wird häufig zwischen stationären und rückbaren Bandanlagen. Beispielsweise in Tagebaubetrieben, bei denen die Förderanlagen dem Abbaufortschritt folgen müssen, finden häufig rückbare Bandanlagen Anwendung.

Störungen an Gurtbändern sind hauptsächlich auf defekte Tragrollen oder schlecht ausgerichtete Traggerüste zurückzuführen. Schlecht ausgerichtete Traggerüste verursachen Schieflauf des Bandes oder Überbelastung einzelner Bandtragrollen. Häufig sind Lagerschäden an den Lagern der Bandtragrollen die Ursache für Störungen. Hierdurch entsteht eine erhöhte Wärmeentwicklung, die schlimmstenfalls zum offenen Brand führen kann. Schadhafte Tragrollen werden häufig durch erhöhte Schallemissionen oder gar erst durch Rauchentwicklung oder offenen Brand auffällig.

Aus der DE 10003308 A1 sind ein Verfahren und eine Einrichtung zur Geräuschquellendetektion und - Lokalisierung an Förderbändern, insbesondere an Bandstrecken in Tagebaubetrieben bekannt. Das Verfahren wird mittels einer mobilen förderbandungebundenen Messeinrichtung durchgeführt, mit welcher während einer etwa parallelen Vorbeifahrt an einem Förderband der von den einzelnen Rollen und/oder Girlanden des Förderbandes ermittelte Schallpegel erfasst wird, die während der Vorbeifahrt zumindest abschnittsweise kontinuierlich erfassten Schallpegel in einer Anzahl von n-Schallspektren unterteilt wird und eine Zuordnung bestimmter Schallspektren zu bestimmten Rollen oder Girlanden mittels eines parallel zu dem erfassten Schallpegel aufgezeichneten Ortungs- oder Positionssignals erfolgt.

Diese Verfahrensweise hat sich bewährt. Gleichwohl passiert es häufiger, dass auch gute Tragrollen aussortiert werden, da die Lokalisierung derTragrollen nicht absolut genau ist. Es ist auch leicht vorstellbar, dass es verhältnismäßig mühselig ist, hunderte von Kilometern an Bandstraßen auf diese Art und Weise abzufahren.

Schließlich ist auch der Ausrichtzustand von Bandanlagen entscheidend für den Energieverbrauch und den störungsfreien Betrieb. Bei gut ausgerichteten Tragrollengerüsten wird ein verhältnismäßig mittiger Gurtlauf erzielt. Bei etwas schlechterer Ausrichtgüte ist der mittige Gurtlauf nicht mehr gewährleistet, die Detektion dieser schlechten Ausrichtung ist jedoch über die Erfassung der Schallemission nicht möglich.

Aus der DE 199 11 642 A1 sind ein Verfahren und einer Vorrichtung zur Diagnose des Schädigungszustandes von Tragrollen in Gurtbandförderern gemäß Oberbegriff von Anspruch 1 bekannt, welche sich dadurch auszeichnen, dass an der Oberfläche oder im Inneren des Fördergurtes Schubspannungsmessgeber für Mittelrollen und Wegmessgeber angeordnet sind und aus den Messwerten der Schubspannungsmessgeber für Mittelrollen und der Wegmessgeber beim Lauf des leeren oder belasteten Fördergurtes über die Tragrollen die Umfangskraft der Tragrollen berechnet, registriert, vorverarbeitet, zwischengespeichert und bei Vorbeilauf an einer Abfrageeinheit ausgelesen wird.

Durch diese Verfahrensweise ist es erforderlich, ein separates Wegmesssystem in die Sensorik zu integrieren. Darüber hinaus ist eine Eichung des Systems über eine

Einzellast erforderlich. Unter Verwendung eines Volumen- und Dichtescanners oder einer Bandwaage muss weiterhin jeweils das aktuelle Fördergutgewicht ermittelt werden.

Aus der DE 199 11 640 A1 ist bekannt, an der Oberfläche oder im Inneren eines Fördergurtes Druckmessgeber und Wegmessgeber anzuordnen, aus deren Messwerten beim Lauf des leeren Fördergurtes über die Tragrollen die Einbaufehler der Tragrollenstation des Obertrums registriert und berechnet werden. Weiterhin sind Druckmessgeber seitlich und Beschleunigungsmessgeber auf der Gutseite des Fördergutes so angeordnet, dass aus deren Messwerten die Einbaufehler der Tragrollenstationen registriert, berechnet, gespeichert und daraus Informationen über deren Zustand und den Instandsetzungsbedarf erzeugt werden können.

Auch dieses Verfahren ist verhältnismäßig aufwendig.

Der Erfindung liegt daher die Aufgabe zugrunde, ein neues Verfahren bereitzustellen, mit welchem die Bandausrichtung und/oder der Bandlauf einer Gurtbandfördereinrichtung mit verhältnismäßig einfachen Mitteln kostengünstig überwacht werden kann. Unter Überwachung des Bandlaufs im Sinne der vorliegenden Erfindung ist insbesondere die Erfassung von defekten Tragrollen zu verstehen.

Die Aufgabe wird zunächst gelöst durch ein Verfahren zur Überwachung der Bandausrichtung und/oder des Bandlaufs einer Gurtbandfördereinrichtung, welches folgende Verfahrensschritte umfasst:
a) Messen des Druck- und/oder Schubspannungsverlaufs innerhalb des Gurtbandes beim Überfahren einer Tragrollenanordnung,
b) Aufzeichnung des gemessenen Signals und Zuordnung des Signals einer bestimmten Tragrollenanordnung und
c) Visualisierung des mit örtlicher Zuordnung versehenen Signals zwecks Detektion von Fehlausrichtung des Bandes oder Defekten an den betreffenden Tragrollen,
wobei sich das Verfahren gemäß der Erfindung dadurch auszeichnet, dass die Zuordnung eines bestimmten Messsignals zu einer bestimmten Tragrollenanordnung unter Verrechnung der Anzahl und der zeitlichen Abstände charakteristischer Messsignale zueinander unter Berücksichtigung der Geschwindigkeit des Gurtbandes erfolgt, wobei die Messung und Aufzeichnung des Signals ohne Zuhilfenahme von Wegmesssensoren erfolgt.

Dem erfindungsgemäßen Verfahren liegt die Erkenntnis zugrunde, dass innerhalb des Gurtbandes beim Überfahren einer Tragrollenanordnung ein typischer Druck- und/oder Schubspannungsverlauf erzeugt wird, der mittels eines Sensors erfassbar und auswertbar ist. Ist eine Tragrolle aufgrund eines Lagerdefekts schadhaft oder eine Tragrolle innerhalb einer Anordnung von mehreren Tragrollen aufgrund von Fehlausrichtung des Bandes mehr oder weniger belastet, wird ein von dem typischen Druck- und/oder Schubspannungsverlauf abweichendes Signal erzeugt, aufgrund dessen die Störstelle innerhalb der Bandstrecke lokalisierbar ist.

Da die Girlanden bzw. Tragrollenstationen feste Abstände zueinander haben und der Umlauf des Gurtes um eine Trommel bzw. um eine Umkehrstation ein deutlich anderes Signal erzeugt, lässt sich die Lage der Tragrollen durch einfaches Abzählen der Signale der Tragrollen von dem Signal einer Umkehrstation oder einer Antriebsstation bestimmen. Beispielsweise ist bei einer Bandanlage mit 7,5 m/s Gurtbandgeschwindigkeit und 1,875 m Girlandenabstand bzw. Tragrollenabstand alle 0,25 s ein Druck- oder Schubspannungssignal zu erwarten. Aus dem Fehlen des Signals oder einer Abweichung von einem typischen Signalverlauf lässt sich auf eine Störung schließen. Bei ausbleibendem Signal ist es wahrscheinlich, dass das Gurtband nicht mit der Tragrolle in Berührung ist oder dass die Tragrolle fehlt. Bei einem abweichenden Signalverlauf besteht die Möglichkeit, dass die Tragrolle übermäßig belastet ist oder einen Lagerschaden aufweist. Schieflauf des Bandes beispielsweise zeigt sich durch sukzessives Anwachsen der Auflast an einer Seite der Bandanlage auf Kosten der anderen Seite.

Zweckmäßigerweise erfolgt eine Aufzeichnung des quantitativen Verlaufs eines im

Gurtband gemessen Schubspannungssignals über den zeitlichen Verlauf des Signals bei Überfahren einer Tragrollenanordnung wobei das aufgezeichnete und mit Ortskennung versehene Signal zur Beurteilung des Bandlaufs und/oder der Bandausrichtung an der betreffenden Stelle herangezogen wird.

Besonders vorteilhaft ist es, wenn mittels mehrachsiger Kraftsensoren bzw. Schubspannungssensoren die Messung der Schubspannung in zwei zueinander senkrechten Achsen erfolgt, vorzugsweise in Richtung des Bandlaufs und quer zur Richtung des Bandlaufes. Durch den Vergleich der Längs- und Querkraftkomponenten innerhalb des Gurtbandes mit der Auflast des Gurtbandes kann die Haftreibung zwischen Gurt und Tragrolle ermittelt werden, woraus Aussagen über die Schieflaufneigung des Gurtbandes abgeleitet werden können. Ein einseitiger Abfall des Reibwertes - etwa durch Schlagregen oder Bedüsung - führt zu Schieflauf. Die Berücksichtigung aller Längs- und Querkräfte aller Tragrollen im Umlauf ermöglicht Aussagen über die aktuelle Schieflaufgefährdung und eröffnet die Möglichkeit von Gegenmaßnahmen. Denkbar ist beispielsweise die gezielte Wasserbedüsung der Gurtseite zur der der Gurt schief läuft.

Die erfassten Messwerte können beispielsweise in einem Zwischenspeicher abgelegt werden und zyklisch ausgelesen oder ausgegeben werden.

Besonders vorteilhaft ist es, wenn die erfassten Messwerte berührungslos ausgelesen werden, beispielsweise können die erfassten Messwerte per Funk an eine Auswertestation übertragen werden.

Die der Erfindung zugrunde liegende Aufgabe wird weiterhin gelöst durch einen Gurtbandförderer für Schüttgut zur Durchführung des erfindungsgemäßen Verfahrens, mit wenigstens einem zwischen Umkehrstationen und/oder Antriebsstationen endlos umlaufenden, flexiblen Gurtband, welches ein Lasttrum und ein Leertrum bildet, wobei das Gurtband zumindest teilweise zwischen den Stationen auf Tragrollen abgestützt ist und der Gurtbandförderer sich dadurch auszeichnet, dass das Gurtband wenigstens eine Messeinrichtung zur Erfassung von Druck- und/oder Schubspannungen sowie Mittel zur Ausgabe und/oder Speicherung der erfassten Messwerte aufweist und dass die Messeinrichtung in das Gurtband eingebettet ist, wobei die Messeinrichtung wenigstens einen mehrachsigen Druck- und/oder Schubspannungssensor umfasst.

Durch diese Lösung kann eine gesamte Bandanlage über die Länge eines endlos umlaufenden Gurtbandes mit einer minimalen Anzahl von Messeinrichtungen überwacht werden, ohne dass es hierzu erforderlich wäre Messeinrichtungen an einzelnen Rollen oder an einzelnen Tragrollengerüsten vorzusehen.

Wenn das Gurtband aus gummielastischem Material mit in dieses einvulkanisierten Zugträgern besteht ist es vorteilhaft, wenn wenigstens eine Messeinrichtung in das Gurtband einvulkanisiert ist. Besonders zweckmäßig ist es, wenn beiderseits der im Gurtband befindlichen Zugträger jeweils mehrere, entsprechend der Anzahl der Tragrollen pro Tragrollenstation über die Breite des Gurtbandes verteilt angeordnete Messeinrichtungen in das Gurtband eingebettet sind, so dass sowohl für das Obertrum als auch für das Untertrum des Gurtes jeweils für jede der nebeneinander angeordneten Tragrollen ein Messsignal beim Überfahren derselben erzeugt werden kann. So kann auch durch Vergleich der Messsignale von jeweils nebeneinander angeordneten Tragrollen (quer zur Förderrichtung) Aufschluss über die Gurtbandausrichtung geben.

Zweckmäßigerweise umfasst die Messeinrichtung Mittel zur Auswertung und/oder Speicherung der Messwerte.

Als Mittel zur Ausgabe von gegebenenfalls ausgewerteten Messwerten kann beispielsweise wenigstens ein Transmitter und/oder ein Transponder in das Gurtband eingebettet sein. Mittels eines Transmitters können die ausgewerteten Messwerte über eine Funkstrecke an eine Station gesendet werden.

Alternativ ist es möglich, einen Zwischenspeicher vorzusehen, der mit einer Schnittstelle in Form einer von außen zugänglichen Steckverbindung versehen ist. Nach einem oder mehreren Umläufen des Gurtbandes können dann die im Zwischenspeicher gespeicherten Messwerte ausgelesen und ausgewertet werden.

Bei Aufzeichnung des Messsignals kann durch eine geeignete Verrechnung eine für jede Tragrolle spezifische Kennung, beispielsweise in Form eines Zahlencodes, erzeugt werden. Die Kennung aller Tragrollen kann beispielsweise in geeigneten Abständen ausgelesen und ausgewertet werden. Die Messeinrichtungen können jeweils ein Rechenwerk und einen Speicher umfassen.

Die Erfindung wird nachstehend anhand eines Ausführungsbeispiels unter Zuhilfenahme der beigefügten Zeichnungen erläutert.

Es zeigen:
- Fig. 1: eine schematische Ansicht des Gurtbandförderers nach der Erfindung,
- Fig. 2: einen Schnitt entlang der Linien II-II in Fig. 1,
- Fig. 3: einen Schnitt durch das Gurtband,
- Fig. 4: eine graphische Darstellung des typischen Schubspannungsverlaufs in einem Gurtband bei Überfahren einer Tragrolle, wobei der typische Schubspan- nungsverlauf in dem Gurtband bei Überfahren einer intakten Tragrolle und bei Überfahren einer defekten Tragrolle aufgezeichnet sind und
- Fig. 5: eine der Fig. 4 entsprechende graphische Darstellung des Schubspannungs- verlaufs in einem Gurtband, wobei unterschiedliche Höhenausrichtungen von den in Förderrichtung hintereinander angeordneten Tragrollengerüsten bzw. Girlanden dargestellt sind.

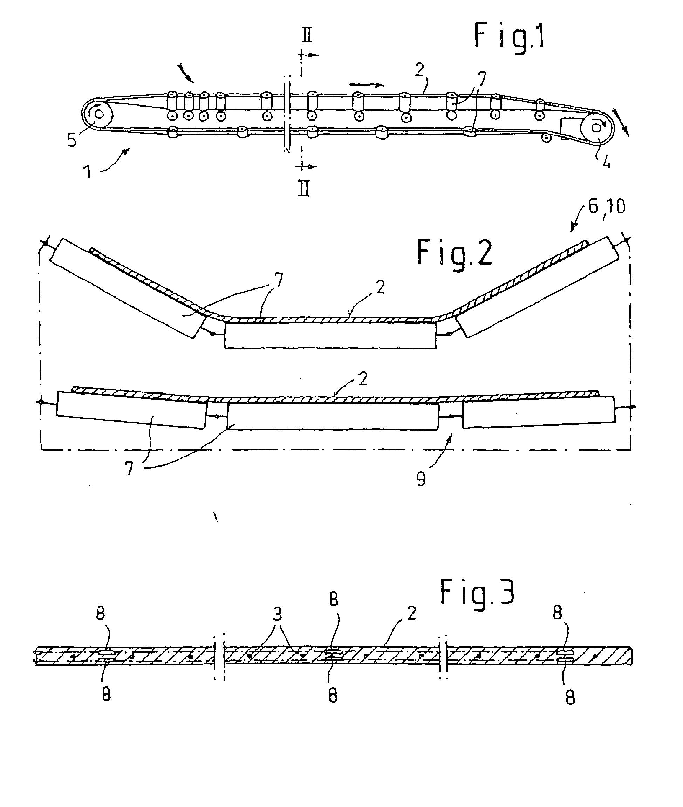

Die Fig. 1 zeigt schematisch vereinfacht einen typischen Gurtbandförderer 1 mit einem endlos umlaufenden Gurtband 2 aus gummielastischem Material mit einvulkanisierten Zugträgern in Form von Stahlseilen 3, einer Antriebstrommel 4 und einer Hecktrommel 5 und zwischen Antriebstrommel 4 und Hecktrommel 5 angeordneten Tragrollengerüsten 6 mit Tragrollen 7, auf denen das Gurtband 2 abgestützt ist. Anstelle von Tragrollengerüsten 6 können selbstverständlich auch Tragrollengirlanden vorgesehen sein. Gurtspanneinrichtungen und Gurtschleifen sind hier aus Vereinfachungsgründen weggelassen. Es ist für den Fachmann offensichtlich, dass der beschriebenen Gurtbandförderer 1 stark vereinfacht ist.

Zur Durchführung des Verfahrens gemäß der Erfindung ist vorgesehen, dass in das Gurtband 2 beiderseits der als Zugträger dienenden Stahlseile 3 jeweils drei Messeinrichtungen 8 einvulkanisiert sind, wobei die in Fig. 3 schematisch dargestellten Messeinrichtungen 8 jeweils oberhalb der Stahlseile 3 über die Breite des Gurtbandes 2 gesehen jeweils einer Tragrolle 7 im Leertrum (Untertrum) zugeordnet sind und die in Fig. 3 unterhalb der Stahlseile 3 angeordneten Messeinrichtungen 8 jeweils einer Tragrolle 7 im Lasttrum (Obertrum) zugeordnet sind. Für das Lasttrum 10 und das Leertrum 9 sind jeweils getrennte Messeinrichtungen 8 vorgesehen, weil die Stahlseile 3 eine ungehinderte Fortpflanzung des Schubspannungssignals innerhalb des Gurtbandes verhindern. Jede Messeinrichtung 8 umfasst im einfachsten Fall einen Sensor, der als ein- oder mehrachsiger Druck- und/oder Schubspannungssensor ausgebildet sein kann. Zusätzlich kann vorgesehen sein, dass der Sensor temperaturempfindlich ist oder ein zusätzlicher Temperatursensor vorgesehen ist, um beispielsweise eine heißgelaufene Tragrolle 7 über deren Wärmeabgabe detektieren zu können.

Bei dem bevorzugten Ausführungsbeispiel ist vorgesehen, dass die Messeinrichtungen 8 jeweils Schubspannungssensoren umfassen. Weiterhin umfassen die Messeinrichtungen 8 wenigstens eine Auswertelogik, beispielsweise in Form eines Analogrechenwerks und einen Datenspeicher. Über den gesamten Umlauf des Gurtbandes 2 sind insgesamt sechs Messeinrichtungen 8 vorgesehen, jeweils drei für das Lasttrum 10 und drei für das Leertrum 9. In Fig. 3 sind die Messeinrichtungen 8 für das Lasttrum 10 und das Leertrum 9 in der gleichen Schnittebene dargestellt, es ist jedoch selbstverständlich, dass diese an verschiedenen Stellen in Längsrichtung des Gurtbandes 2 angeordnet sein können.

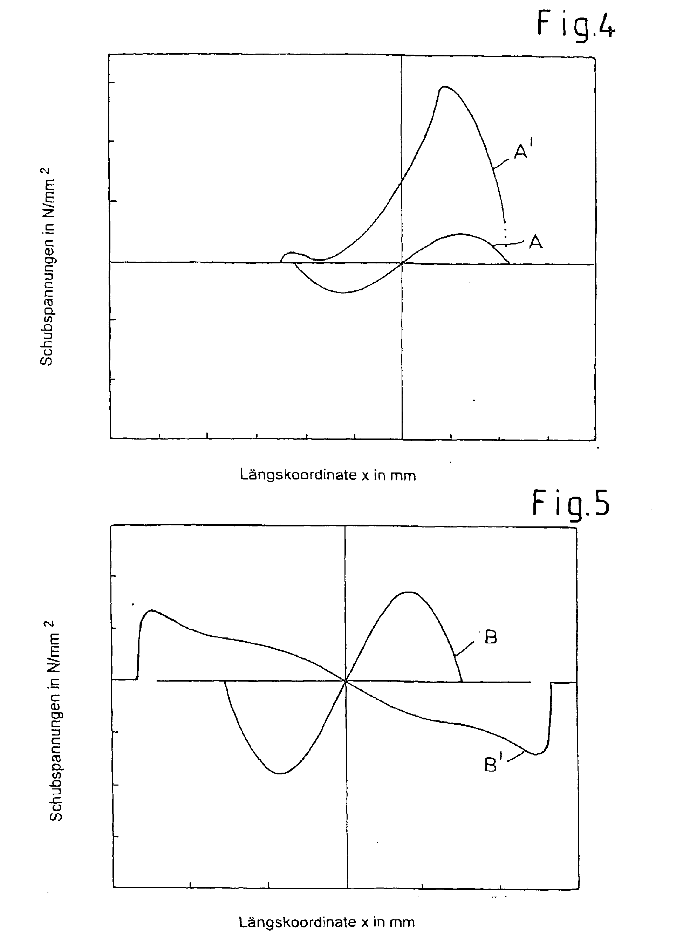

Wenn die Messeinrichtungen 8 eine Tragrollenanordnung bestehend aus drei Tragrollen 7 überfahren, wird für jede Tragrolle 7 ein typisches Schubspannungssignal erzeugt, welches in Fig. 4 beispielsweise mit A bezeichnet ist. Das Signal für jede Tragrolle wird in dem in der Messeinrichtung 8 vorgesehenen Rechenwerk mit einer Kennung versehen, die eine örtliche Zuordnung, beispielsweise in Form von einer Abstandsinformation bezogen auf die Antriebstrommel 4 oder die Hecktrommel 5 ermöglicht. Die Kennung wird in dem Speicher abgelegt. Eine bestimmte Anzahl von mit Kennung versehenen Messsignalen kann über eine bestimmte Anzahl von Umläufen der Messeinrichtungen 8 gespeichert werden. Über eine nicht dargestellte Steckverbindung werden die Daten dann nach Stillsitzen des Gurtbandförderers 1 ausgelesen und zur Beurteilung des Bandlaufs bzw. des Zustandes einzelner Tragrollen visualisiert und/oder ausgewertet.

Alternativ können den Messeinrichtungen 8 Transmitter oder Transponder zugeordnet sein, mittels denen die aufgenommenen Messwerte fortlaufend an eine entfernt angeordnete Station übertragen werden.

Der Vorteil der Anordnung der Messeinrichtungen 8 innerhalb des Gurtbandes 2 liegt auf der Hand. Zur Überwachung vieler Kilometer eines Gurtbandförderers bedarf es einer verhältnismäßig geringen Anzahl von Messeinrichtungen 8. Ohne Begehung oder Befahrung des Gurtbandförderers 1 können Störungen verhältnismäßig genau und zeitnah lokalisiert werden.

In den Fig. 4 und 5 sind typische Schubspannungsverläufe jeweils beim Überfahren einer Messeinrichtung bzw. des Senders über eine Tragrolle 7 dargestellt. Aufgezeichnet ist der absolute Betrag der Schubspannung in N/mm² über die Auflagebreite des Gurtbandes 2 auf der Tragrolle 7 (Längskoordinate) in mm. In Fig. 4 ist mit A der typische Schubspannungsverlauf beim Überfahren einer intakten Tragrolle 7 dargestellt. Es ergibt sich eine sinusförmige Kurve, die durch den Ursprung des Koordinatensystems verläuft. Bei unterschiedlichen Beladungszuständen des Gurtbandes ändert sich die Amplitude der Kurve bzw. der Betrag der Schubspannung. Mit anderen Worten, an der absoluten Höhe der Schubspannung lässt sich der Beladungszustand des Gurtbandes 2 erkennen. Der Signalverlauf hingegen lässt Rückschlüsse darauf zu, wie sich die Drehgeschwindigkeit der Tragrolle 7 im Verhältnis zur Geschwindigkeit des Gurtbandes 2 verhält. Die mit A' in Fig. 4 gekennzeichnete Kurve zeigt den typischen Signalverlauf bei gebremster Tragrolle 7, beispielsweise wegen Lagerdefekts. Eine separate Erfassung des Beladungszustandes des Gurtbandes ist nicht erforderlich, da die Auflast für den gurtfesten Sensor während eines halben Umlaufs gleich bleibt und nur der Relativwert zwischen unterschiedlichen Tragrollen benötigt wird, um etwaige Anomalien aufzudecken.

In Fig. 4 sind unterschiedliche Schubspannungsverläufe für unterschiedliche Höhenausrichtungen der in Längsrichtung in einem Gurtbandförderer hintereinander angeordneten Tragrollengerüste 6 dargestellt. Der Signalverlauf B zeigt den Schubspannungsverlauf über die mittlere von in Förderrichtung drei hintereinander angeordneten Tragrollen 7, wobei die Tragrolle in Bezug auf die benachbarten Tragrollen korrekt ausgerichtet ist. Das Signal B' hingegen zeigt den Schubspannungsverlauf über die betreffende Tragrolle, wenn diese Tragrolle etwa 200 mm höher als die jeweils benachbarten Tragrollen angeordnet ist.

### Verfahren zur Überwachung der Bandausrichtung und/oder des Bandlaufs einer Gurtbandfördereinrichtung sowie Gurtbandförderer

### Bezugszeichenliste

- 1: Gurtbandförderer
- 2: Gurtband
- 3: Stahlseile
- 4: Antriebstrommel
- 5: Hecktrommel
- 6: Tragrollengerüste
- 7: Tragrollen
- 8: Messeinrichtungen
- 9: Leertrum
- 10: Lasttrum

## Patentansprüche

1. Verfahren zur Überwachung der Bandausrichtung und/oder des Bandlaufs einer Gurtbandfördereinrichtung, folgende Verfahrensschritte umfassend:
a) Messen des Druck- und/oder Schubspannungsverlaufs innerhalb des Gurtbandes beim Überfahren einer Tragrollenanordnung,
b) Aufzeichnen des gemessenen Signals und Zuordnen des Signals zu einer bestimmten Tragrollenanordnung und
c) Visualisieren des mit örtlicher Zuordnung versehenen Signals zwecks Detektion von Fehlausrichtung des Bandes oder Defekten an den betreffenden Tragrollen,
**dadurch gekennzeichnet, dass** die Zuordnung eines bestimmten Messsignals zu einer bestimmten Tragrollenanordnung unter Verrechnung der Anzahl und der zeitlichen Abstände charakteristischer Messsignale zueinander unter Berücksichtigung der Geschwindigkeit des Gurtbandes erfolgt, wobei die Messung und Aufzeichnung des Signals ohne Zuhilfenahme von Wegsensoren erfolgt.

2. Verfahren nach Anspruch 1, **dadurch gekennzeichnet, dass** die erfassten Messwerte kontinuierlich während des Betriebes des beladenen Gurtbandförderers ausgelesen werden.

3. Verfahren nach einem der Ansprüche 1 oder 2, **dadurch gekennzeichnet, dass** eine Aufzeichnung des quantitativen Verlaufs eines im Gurtband gemessenen Schubspannungssignals über den zeitlichen Verlauf des Signals bei Überfahren einer Tragrollenanordnung erfolgt und dass das aufgezeichnete und mit Ortkennung versehene Signal zur Beurteilung des Bandlaufs und/oder der Bandausrichtung an der betreffenden Stelle herangezogen wird.

4. Verfahren nach einem der Ansprüche 1 bis 3, **dadurch gekennzeichnet, dass** die Messung der Schubspannung in zwei zueinander senkrechten Achsen erfolgt, vorzugsweise in Richtung des Bandlaufs und quer zur Rich- tung des Bandlaufs.

5. Verfahren nach einem der Ansprüche 1 bis 4, **dadurch gekennzeichnet, dass** die erfassten Messwerte in einen Zwischenspeicher abgelegt werden und zyklisch ausgelesen oder ausgegeben werden.

6. Verfahren nach einem der Ansprüche 1 bis 5, **dadurch gekennzeichnet, dass** die erfassten Messwerte berührungslos ausgelesen werden.

7. Gurtbandförderer (1) für Schüttgut zur Durchführung des Verfahrens nach einem der Ansprüche 1 bis 6 mit wenigstens einem zwischen Umkehrstationen und/oder Antriebsstationen endlos umlaufenden, flexiblen Gurtband (2), welches ein Lasttrum (10) und ein Leertrum (9) bildet, wobei das Gurtband zumindest teilweise zwischen den Stationen auf Tragrollen (7) abgestützt ist, wobei das Gurtband wenigstens eine Messeinrichtung zur Erfassung von Druck- und/oder Schubspannungen sowie Mittel zur Ausgabe und/oder Speicherung der erfassten Messwerte aufweist und die Messeinrichtung in das Gurtband eingebettet ist, **dadurch gekennzeichnet, dass** die Messeinrichtung wenigstens einen mehrachsigen Druck- und/oder Schubspannungssensor umfasst.

8. Gurtbandförderer nach Anspruch 7, **dadurch gekennzeichnet, dass** das Gurtband aus gummielastischem Material mit in dieses einvulkanisierten Zugträgern besteht und dass die Messeinrichtung in das Gurtband einvulkanisiert ist.

9. Gurtbandförderer (1) nach Anspruch 8, **dadurch gekennzeichnet, dass** beiderseits der im Gurtband (2) befindlichen Zugträger jeweils mehrere entsprechend der Anzahl der Tragrollen über die Breite des Gurtbandes (2) verteilt angeordnete Messeinrichtungen (8) vorgesehen sind.

10. Gurtbandförderer (1) nach einem der Ansprüche 7 bis 9, **dadurch gekennzeichnet, dass** die Messeinrichtung Mittel zur Auswertung und/oder Speicherung der Messwerte umfasst.

11. Gurtbandförderer (1) nach einem der Ansprüche 7 bis 10, **dadurch gekennzeichnet, dass** als Mittel zur Ausgabe von gegebenenfalls ausgewerteten Messwerten wenigstens ein Transmitter und/oder ein Transponder in das Gurtband (2) eingebettet ist.

## Claims

1. Method of monitoring the alignment and/or running of the belt of a belt-type conveying apparatus, said method comprising the following steps:
a) measurement of the compressive and/or shear stress development within the belt on passing over a carrying-roller arrangement;
b) recording of the signal measured and allocation of said signal to a specific carrying-roller arrangement; and
c) visualising of the signal which has been provided with local allocation, for the purpose of detecting misalignment of the belt or defects at the carrying rollers in question;
**characterised in that** the allocation of a specific measurement signal to a specific carrying-roller arrangement is carried out by calculating the number and time intervals of characteristic measurement signals in relation to one another, taking into account the speed of the belt, the measurement and recording of the signal taking place without the aid of path sensors.

2. Method according to claim 1, **characterised in that** the measurements detected are read out continuously while the loaded belt conveyor is in operation.

3. Method according to either of claims 1 or 2, **characterised in that** a recording of the quantitative development of a shear stress signal measured in the belt is carried out over the chronological development of the signal on passing over a carrying-roller arrangement, and that the signal which has been recorded and provided with location identification is used for assessing the running and/or alignment of the belt at the point in question.

4. Method according to one of claims 1 to 3, **characterised in that** the measurement of the shear stress is carried out in two mutually perpendicular axes, preferably in the direction of running of the belt and transversely to the direction of running of the band.

5. Method according to one of claims 1 to 4, **characterised in that** the measurements detected are deposited in an intermediate storage device and are cyclically read out or outputted.

6. Method according to one of claims 1 to 5, **characterised in that** the measurements detected are read out in a contact-less manner.

7. Belt conveyor (1) for bulk material for carrying out the method according to one of claims 1 to 6, having at least one flexible belt (2) which circulates endlessly between tail stations and/or driving stations and which constitutes a load-carrying strand (10) and a return strand (9), wherein the belt is at least partially supported between the stations on carrying rollers (7), and wherein said belt has at least one measuring apparatus for detecting compressive and/or shear stresses as well as means for outputting and/or storing the measurements detected, and said measuring apparatus is embedded in the belt, **characterised in that** the measuring apparatus comprises at least one multi-axial compressive and/or shear stress sensor.

8. Belt conveyor according to claim 7, **characterised in that** the belt consists of rubbery-elastic material with tensile supports vulcanised into it, and that the measuring apparatus is vulcanised into the belt.

9. Belt conveyor (1) according to claim 8, **characterised in that**, on either side of the tensile supports located in the belt (2), there are provided in each case a number, which corresponds to the number of carrying rollers, of measuring apparatuses (8) which are arranged in a manner distributed over the width of the belt (2).

10. Belt conveyor (1) according to one of claims 7 to 9, **characterised in that** the measuring apparatus comprises means for evaluating and/or storing the measurements.

11. Belt conveyor (1) according to one of claims 7 to 10, **characterised in that** at least one transmitter and/or transponder is embedded in the belt (2) as the means for outputting any measurements evaluated.

## Revendications

1. Procédé de surveillance de l'orientation de la bande et/ou du défilement de la bande d'un dispositif transporteur à courroie, comprenant les étapes de procédé suivantes :
a) mesure de la variation de la sollicitation de pression et/ou de la variation de la sollicitation au cisaillement dans la courroie lors du franchissement d'un dispositif à rouleaux porteurs,
b) enregistrement du signal mesuré et association du signal à un dispositif à rouleaux porteurs prédéterminé et
c) visualisation du signal doté d'attribution locale pour la détection des orientations erronées de la bande ou des défauts sur les rouleaux porteurs concernés,
**caractérisé en ce que** l'association d'un signal de mesure prédéterminé à un dispositif à rouleaux porteurs prédéterminé s'effectue en comptant le nombre et les intervalles de temps de signaux de mesure caractéristiques et en tenant compte de la vitesse de la courroie, la mesure et l'enregistrement du signal s'effectuant sans l'aide de capteurs de course.

2. Procédé selon la revendication 1, **caractérisé en ce que** les valeurs de mesure enregistrées sont lues de façon continue pendant le fonctionnement du transporteur à courroie chargé.

3. Procédé selon l'une quelconque des revendications 1 ou 2, **caractérisé en ce qu'**un enregistrement de la variation quantitative d'un signal de sollicitation au cisaillement mesuré dans la courroie en fonction de la variation dans le temps du signal lors du franchissement d'un dispositif de rouleaux porteurs est effectué et **en ce que** le signal enregistré et doté du code local est utilisé pour évaluer le défilement de la bande et/ou l'orientation de la bande à l'endroit concerné.

4. Procédé selon l'une quelconque des revendications 1 à 3, **caractérisé en ce que** la mesure de la sollicitation au cisaillement s'effectue dans deux axes perpendiculaires entre eux, de préférence dans le sens du défilement de bande et transversalement au sens du défilement de bande.

5. Procédé selon l'une quelconque des revendications 1 à 4, **caractérisé en ce que** les valeurs mesurées enregistrées sont déposées dans une mémoire intermédiaire et sont lues ou sorties de façon cyclique.

6. Procédé selon l'une quelconque des revendications 1 à 5, **caractérisé en ce que** les valeurs de mesure enregistrées sont lues sans contact.

7. Transporteur à courroie (1) pour du produit en vrac pour la mise en oeuvre du procédé selon l'une quelconque des revendications 1 à 6, comprenant au moins une courroie (2) flexible, tournant de façon continue entre des stations d'inversion et/ou des stations d'entraînement, qui forme un brin de charge (10) et un brin vide (9), la courroie étant soutenue au moins en partie entre les stations sur des rouleaux porteurs (7), la courroie présentant au moins un dispositif de mesure pour l'enregistrement de sollicitations de pression et/ou de sollicitations au cisaillement ainsi que des moyens pour l'édition et/ou le stockage des valeurs mesurées enregistrées et le dispositif de mesure est inséré dans la courroie, **caractérisé en ce que** le dispositif de mesure comprend au moins un capteur de sollicitation de pression et/ou un capteur de sollicitation au cisaillement à plusieurs axes.

8. Transporteur à courroie selon la revendication 7, **caractérisé en ce que** la courroie est à base de matériau en gomme élastique avec des supports de traction intégrés par vulcanisation dans la courroie et **en ce que** le dispositif de mesure est intégré par vulcanisation dans la courroie.

9. Transporteur à courroie (1) selon la revendication 8, **caractérisé en ce que** plusieurs appareils de mesure (8), disposés et répartis sur la largeur de la courroie (2) en fonction du nombre des rouleaux porteurs, sont prévus sur chacun des deux côtés des supports de traction se trouvant dans la courroie (2).

10. Transporteur à courroie (1) selon l'une quelconque des revendications 7 à 9, **caractérisé en ce que** l'appareil de mesure comprend des moyens pour l'analyse et/ou le stockage des valeurs de mesure.

11. Transporteur à courroie (1) selon l'une quelconque des revendications 7 à 10, **caractérisé en ce qu'**au moins un transmetteur et/ou un transpondeur est/sont intégré(s) dans la courroie (2) comme moyen(s) pour éditer des valeurs de mesure éventuellement analysées.
